# EUROPEAN PATENT APPLICATION

(11) **EP 2 538 483 A1**
(43) Date of publication of application: **26.12.2012**
(21) Application number: 11742359.0
(22) Date of filing: 15.02.2011
(51) Int. Cl.: H01M 10/04, H01M 2/04, H01M 2/26

(54) **SECONDARY CELL AND SECONDARY CELL PRODUCTION DEVICE**

(30) Priority: 15.02.2010 JP 2010030421
(71) Applicant: Mitsubishi Heavy Industries, Ltd., Tokyo 108-8215 (JP)
(72) Inventor: CHIBA Daisuke, Tokyo 108-8215 (JP)
(74) Representative: Henkel, Breuer & Partner
(86) International application number: PCT/JP2011/053126
(87) International publication number: WO 2011/099620

(57) **Abstract**

Disclosed is a secondary cell provided with an electrode body in which a positive plate and a negative plate are alternately stacked with a separator therebetween, a case that houses the aforementioned electrode body, and a cover that is provided with a positive terminal and a negative terminal and fits in the aforementioned case, wherein the aforementioned positive plate is equipped with a roughly plate-like main positive electrode body and a first tab that is disposed axisymmetrically with respect to the axis of the center of gravity of the aforementioned positive plate and that is connected to the aforementioned main positive electrode body and the aforementioned positive terminal, the aforementioned negative plate is equipped with a roughly plate-like main negative electrode body and a second tab that is disposed axisymmetrically with respect to the axis of the center of gravity of the aforementioned negative plate and that is connected to the aforementioned main negative electrode body and the aforementioned negative terminal, and the aforementioned first and second tabs are disposed in positions that do not mutually overlap during stacking.

## Description

### [Field of the Invention]

The present invention relates to a secondary battery in which a positive electrode plate and a negative electrode plate are stacked, and a secondary battery manufacturing apparatus for manufacturing the secondary battery.
This patent application claims priority of Japanese Patent Application No. 2010-030421, filed on February 15, 2010 in the Japanese Patent Office, the entire contents of which are hereby incorporated by reference.

### [Background Art]

A stack-type secondary battery has an electrode body in which a positive electrode plate and a negative electrode plate with tabs formed at edges thereof are alternately stacked, and a positive electrode terminal and a negative electrode terminal correspondingly connected to the tabs of the positive electrode plate and the negative electrode plate, respectively. Here, because the positive electrode plate and the negative electrode plate should be insulated from each other in a stacked state, a separator formed of an insulating material is arranged between the plates (e.g., see Patent Document 1). In addition, the separator may have a pouch shape to surround the negative electrode plate to be insulated from the positive electrode plate (e.g., see Patent Document 2).

However, when a positional error occurs during stacking the positive electrode plate and the negative electrode plate of the electrode body, Li deposition is caused by an uneven reaction, or charge/discharge performance is affected by a reduction of reaction area. Further, when the error occurs, although the separator should have been interposed between the positive electrode plate and the negative electrode plate before the error occurs, the positive electrode plate and the negative electrode plate adjacent to the positive electrode plate may contact each other and cause a short circuit. Accordingly, in a process of manufacturing the electrode body, the positive electrode plate and the negative electrode plate should be precisely stacked, and in general, the positive electrode plate and the negative electrode plate are alternately stacked with being positioned by a positioning pin, etc.

### [Prior Art Document]

### [Patent Document]

[Patent Document 1] Japanese Patent Application Laid-Open No. 2006-339054 [Patent Document 2] Japanese Patent Application Laid-Open No. 2003-45498

### [Disclosure of the Invention]

### [Problems to be Solved by the Invention]

However, the size of the positive electrode plate and the size of the negative electrode plate as described in Patent Documents 1 and 2 are different from each other in general. In particular, when one electrode plate is covered by a pouch-type separator as described in Patent Document 2, the total size for one electrode plate becomes larger because the separator is rimmed to form the pouch. Accordingly, while one electrode plate having a larger size between the positive electrode plate and the negative electrode plate can be precisely positioned by a pin, the other electrode plate having a smaller size cannot be positioned by the pin due to interference with the previously stacked electrode plate. Therefore, to position the electrode plate accurately, it is needed to use a conveyor having high accuracy to position the electrode plate. As a result, an electrode body cannot be formed, that the electrode plates are arranged with high accuracy. Even when the electrode body can be formed, it is needed to have long time to position the electrode plates. Therefore, the cost of its production may be increased.

The present invention has been made in view of the above-described circumstances, and an object of the invention is to provide a secondary battery without the positional error substantially when the size of the positive electrode plate and the size of the negative electrode plate are different from each other, which is achieved by precise positioning and stacking both of the electrode plates, and an apparatus for manufacturing the same secondary battery.

### [Means for Solving the Problems]

To achieve the above-described object, a secondary battery manufacturing apparatus of the present invention includes: a cover fixing part to fix a cover having shaft parts of a positive electrode terminal and a negative electrode terminal in order that the shaft parts are directed upward; a positive electrode plate conveyance part to convey a positive electrode plate having a tab in which a first through-hole is formed and which is arranged to be line-symmetrical with respect to a centerline of the positive electrode plate, to the cover fixing part; a positive electrode plate disposing part to insert the first through-hole of the conveyed positive electrode plate into the shaft part of the positive electrode terminal; a negative electrode plate conveyance part to convey a negative electrode plate having a tab in which a second through-hole is formed and which is arranged to be line-symmetrical with respect to a centerline of the negative electrode plate, to the cover fixing part; a negative electrode plate disposing part to insert the second through-hole of the conveyed negative electrode plate into the shaft part of the negative electrode terminal and to stack the negative electrode plate on the positive electrode plate; and a standing-up unit to stand the cover fixed by the cover fixing part up in order that the stacked positive electrode plate and the stacked negative electrode plate are hung and positioned.

According to the above configuration, in a state in which the cover stood-up by the standing-up unit supports the tabs, the positive electrode plate and the negative electrode plate are hung. Here, because the tab is arranged to be line-symmetrical with respect to a centerline (to be defined later), the positive electrode plate and the negative electrode plate supported and hung by the tab coincide with directions of the centerlines thereof to be automatically positioned.
Therefore, it is possible to manufacture the secondary battery in which both of the electrode plates are precisely positioned and stacked.

In addition, a secondary battery of the present invention includes: an electrode body in which a positive electrode plate and a negative electrode plate are alternately stacked through a separator; a case to store the electrode body; and a cover having a positive electrode terminal and a negative electrode terminal and fitted to the case, wherein the positive electrode plate includes a positive electrode main body having a substantial plate shape, and a first tab arranged to be line-symmetrical with respect to a centerline of the positive electrode plate and connected to the positive electrode main body and the positive electrode terminal, the negative electrode plate includes a negative electrode main body having a substantial plate shape, and a second tab arranged to be line-symmetrical with respect to a centerline of the negative electrode plate and connected to the negative electrode main body and the negative electrode terminal, and the first tab and the second tab are arranged not to overlap each other when the tabs are stacked.

According to the above configuration, in the positive electrode plate and the negative electrode plate, the tabs thereof are arranged to be line-symmetrical with respect to centerlines thereof. Accordingly, the electrode plates are precisely positioned and stacked.
In addition, for example, when the secondary battery is assembled to drive an electric motor of a movable body such as an electric vehicle and vibration in a centerline direction occurs to vertically shake a surface of the cover, application of a rotational force to a positive electrode main body at a connecting part between the positive electrode main body and the tab of the positive electrode plate is prevented and application of a rotational force to a negative electrode main body at a connecting part between the negative electrode main body and the tab of the negative electrode plate is also prevented.
As a result, a failure of the secondary battery such as a breakage of the connecting part can be prevented.

### [Effects of the Invention]

According to a secondary battery manufacturing apparatus of the present invention, when a secondary battery constituted by a positive electrode plate and a negative electrode plate having different sizes is manufactured, the secondary battery can be manufactured with the electrode plates precisely positioned and stacked.
According to the secondary battery of the present invention, the secondary battery in which the positive electrode plates and the negative electrode plates are precisely stacked can be provided.

### [Brief Description of the Drawings]

FIG. 1 is a perspective view of a secondary battery in accordance with an embodiment of the present invention, a portion of which is partially cut;
FIG. 2 is a cross-sectional view along line A-A of FIG 1;
FIG. 3 is a cross-sectional view along line B-B of FIG. 1;
FIG. 4 is a view for explaining a state in that positive electrode plates and negative electrode plates are stacked in accordance with the embodiment of the present invention;
FIG. 5 is a front view of the positive electrode plate of the secondary battery in accordance with the embodiment of the present invention;
FIG. 6 is a front view of the negative electrode plate of the secondary battery in accordance with the embodiment of the present invention;
FIG. 7 is a perspective view schematically showing a secondary battery manufacturing apparatus in accordance with the embodiment of the present invention;
FIG. 8 is a cross-sectional view specifically showing a guide member of the secondary battery manufacturing apparatus in accordance with the embodiment of the present invention;
FIG. 9 is a cross-sectional view specifically showing a guide member attachment/detachment unit of the secondary battery manufacturing apparatus in accordance with the embodiment of the present invention;
FIG. 10 is a cross-sectional view specifically showing a storing unit of the secondary battery manufacturing apparatus in accordance with the embodiment of the present invention;
FIG. 11 is a view for explaining a cover conveyance operation of the secondary battery manufacturing apparatus in accordance with the embodiment of the present invention;
FIG. 12 is a view for explaining a guide member mounting operation of the secondary battery manufacturing apparatus in accordance with the embodiment of the present invention;
FIG. 13 is a view for explaining a stacking operation of the secondary battery manufacturing apparatus in accordance with the embodiment of the present invention;
FIG. 14 is a view for explaining a hanging operation of the secondary battery manufacturing apparatus in accordance with the embodiment of the present invention;
FIG. 15 is a view for explaining a stacking/fixing operation of the secondary battery manufacturing apparatus in accordance with the embodiment of the present invention;
FIG. 16 is a view for explaining a guide member removal operation of the secondary battery manufacturing apparatus in accordance with the embodiment of the present invention;
FIG. 17 is a view for explaining a terminal fixing operation of the secondary battery manufacturing apparatus in accordance with the embodiment of the present invention;
FIG. 18 is a view for explaining a storing operation of the secondary battery manufacturing apparatus in accordance with the embodiment of the present invention;
FIG. 19 is a view for explaining an operation of the secondary battery manufacturing apparatus in accordance with the embodiment of the present invention, in which an opening of a case body is closed by a cover;
FIG. 20 is an exploded side view of a secondary battery in accordance with another embodiment of the present invention;
FIG. 21 is a front view showing another example of the positive electrode plate and the negative electrode plate of the secondary battery in accordance with the embodiment of the present invention; and
FIG. 22 is a side view showing another example of the guide member of the secondary battery in accordance with the embodiment of the present invention.

### [Detailed Description of the Preferred Embodiments]

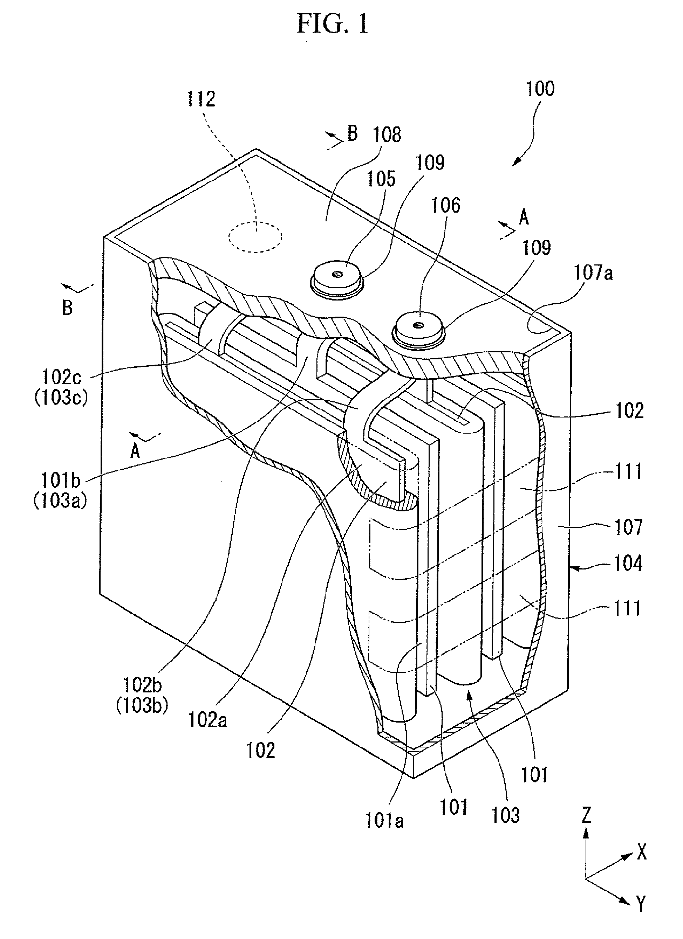

Hereinafter, an embodiment of the present invention will be described with reference to FIGS. 1 to 15. FIGS. 1 to 6 show a secondary battery of the embodiment. As shown in FIGS. 1 to 3, a secondary battery 100 of the embodiment includes an electrode body 103 in which a positive electrode plate 101 and a negative electrode plate 102 are alternately stacked, a case 104 configured to accommodate the electrode body 103, and a positive electrode terminal 105 and a negative electrode terminal 106 formed in the case 104 to correspond to the positive electrode plate 101 and the negative electrode plate 102 therein. The case 104 includes a case body 107 having an opening 107a in a Z-axis direction perpendicular to an X-axis direction in which the electrode body 103 is stacked, and a cover 108 configured to close the opening 107a of the case body 107. In addition, the positive electrode terminal 105 and the negative electrode terminal 106 are attached to the cover 108 via an insulating sleeve 109. One end 105a of the positive electrode terminal 105 and one end 106a of the negative electrode terminal 106 project to the outside of the case 104, and the other end 105b of the positive electrode terminal 105 and the other end 106b of the negative electrode terminal 106 project to the inside of the case 104 and are correspondingly connected to the positive electrode plate 101 and the negative electrode plate 102, respectively.

The positive electrode plate 101 and the negative electrode plate 102 have main bodies 101a and 102a having substantially rectangular plate shapes, and tabs 101b, 102b and 102c projecting from edges of the main bodies 101a and 102a. The tabs 101b, 102b and 102c of the positive electrode plate 101 and the negative electrode plate 102 are perpendicular to the X-axis direction, which is a direction for stacking the electrode plates (herein, it is called as the "stacking direction"), and project in the Z-axis direction, which is a direction toward the positive electrode terminal 105 and the negative electrode terminal 106 in the case 104. In the positive electrode plate 101 and the negative electrode plate 102, the main body 102a of the negative electrode plate 102 is covered by a separator 110 formed of an insulating material, and thus, the positive electrode plate 101 and the negative electrode plate 102 are stacked on each other with the separator 110 arranged between them to insulate the electrode plates, for forming the electrode body 103.
In addition, fixing tapes 111 formed of an insulating material are adhered to edges of the electrode body 143, and thus, the positive electrode plate 101 and the negative electrode plate 102 are fixed not to be dislocated. In this embodiment, the fixing tapes 111 are adhered to both edges of the electrode body 103, in which the electrode plates (i.e., the positive electrode plate 101 and the negative electrode plate 102) are sequentially stacked in the X-axis direction perpendicular to the Y-axis direction and the Z-axis direction.

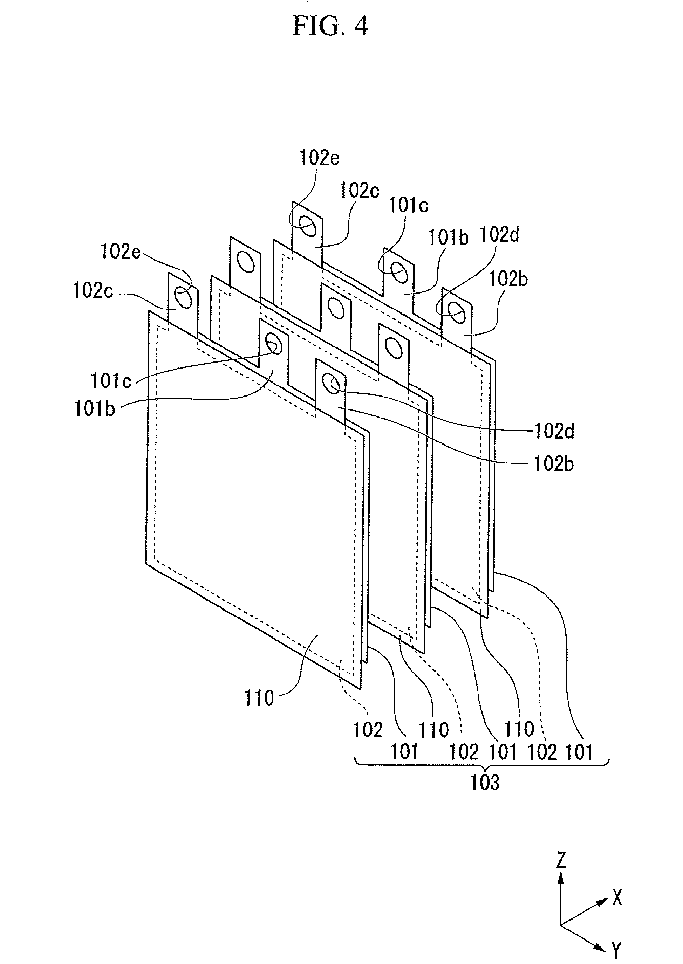

Further, as shown in FIG. 4, when the electrode plates are viewed from the X Direction, the tabs 101b of the positive electrode plate 101 coincide each other, and the tabs 102b and 102c of the negative electrode plate 102 coincide each other, although the tabs 101b and the tabs 102b and 102c do not coincide and are not overlapped. Accordingly, when the electrode body 103 is formed, a positive electrode tab bundle 143a is formed by gathering the tabs 101b of the positive electrode plates 101, and negative electrode tab bundles 143b and 103c are formed by respectively gatering the tabs 102b and the tabs 142c of the negative electrode plates 102. Here, the tabs 101b, 102b and 102c have a corresponding through-hole 101c, 102d or 102e. When the positive electrode tab bundle 103a and the negative electrode tab bundles 103b and 103c are formed, the positions of the through-holes 101 c are corresponded each other, the positions of the through-holes 102d are corresponded each other, and the positions of the through-holes 102e are corresponded each other.

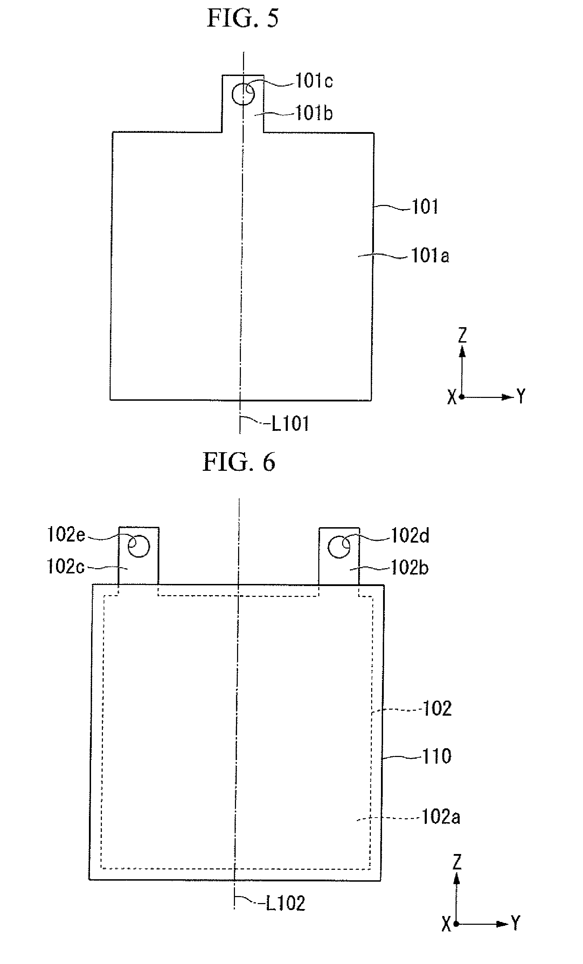

Furthermore, as shown in FIGS. 5 and 6, the tabs 101b, 102b and 102c are arranged to be symmetrical with respect to a centerline L101 which is on the center of gravity of the main body 101 a and which is along the Z-axis direction, or a centerline
L 102 which is on the center of gravity of the main body 102a and which is along the Z-axis direction, at one or two or more positions. Specifically, the tab 101b, that is only one tab for the positive electrode plate 101, is arranged at the main body 101 a of the positive electrode plate 101 to be line-symmetrical with respect to the centerline L101 in the Z-axis direction. In addition, the tabs 102b and 102c are arranged at the main body 102a of the negative electrode plate 102 to be line-symmetrical with respect to the center line L102 in the Z-axis direction. Further, here, the centerline is a line along a projecting direction (i.e., the Z-axis direction) of the tab, which passes through the center of the gravity of the positive electrode plate or the negative electrode plate.

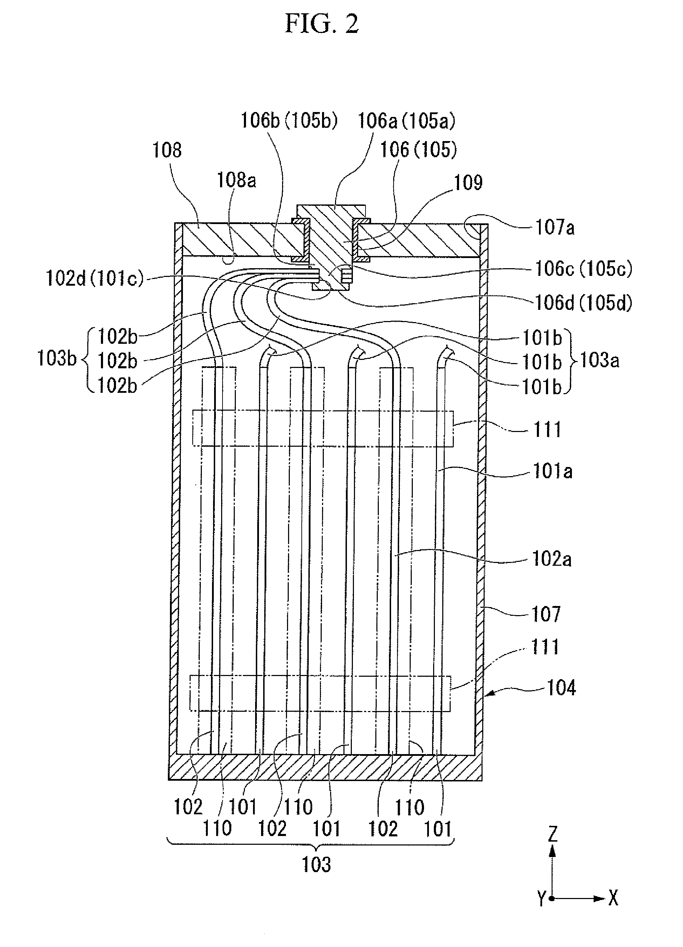

As shown in FIGS. 1 and 2, the tab 101b of the positive electrode plate 101 works as a connecting tab, and the tabs 101b are gathered to form the positive electrode tab bundle 103a. Meanwhile, a shaft part 105c inserted into the through-hole 101c, and a large diameter part 105d having a diameter enlarged in a flange shape from a front end of the shaft part 105c, are formed at the other end 105b of the positive electrode terminal 145. The positive electrode tab bundle 103a in which the shaft part 105c is inserted into the through-hole 101c is sandwiched between the large diameter part 105d and the other end 105b, and fixed thereto.

Similarly, the tab 102b of two tabs 102b and 102c of the negative electrode plate 102 works as a connecting tab, and the tabs 102b are gathered to form the negative electrode tab bundle 103b. Meanwhile, a shaft part 106c inserted into the through-hole 102d, and a large diameter part 106d having a diameter enlarged in a flange shape from a front end of the shaft part 106c, are formed at the other end 106b of the negative electrode terminal 106. The negative electrode tab bundle 103b in which the shaft part 106c is inserted into the through-hole 102d is sandwiched between the large diameter part 106d and the other end 106b, and fixed thereto.

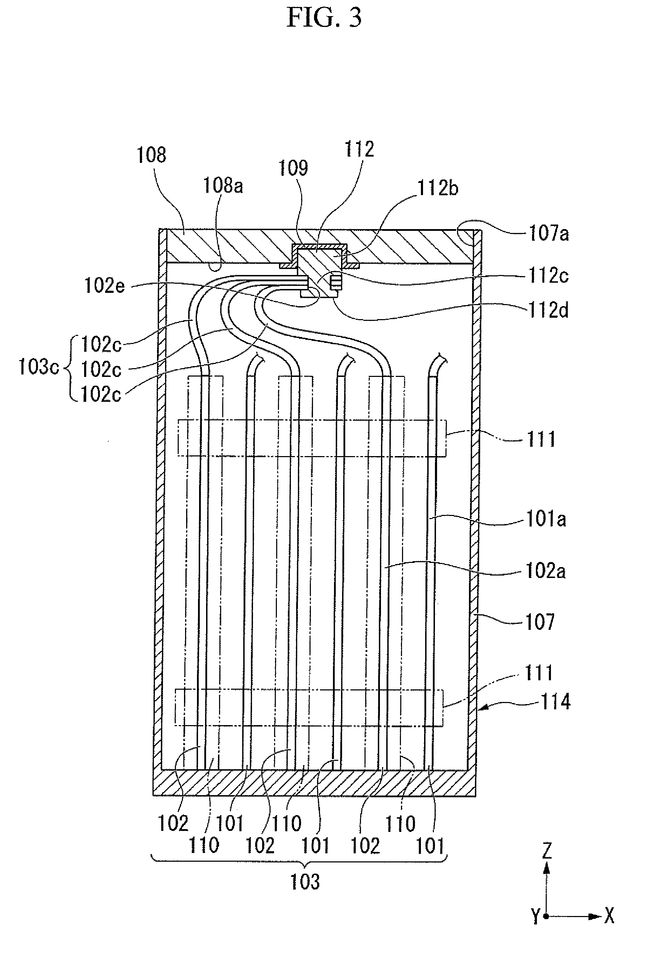

In addition, as shown in FIGS. 1 and 3, in the cover 108 for the case 104, a dummy terminal 112 is formed at a corresponding position to the tab 102c of two tabs 102b and 102c of the negative electrode plate 102. The dummy terminal 112 has only the other end 112b corresponding to the other end 106b of the negative electrode terminal 106, and has no portion corresponding to the front end 106a protruding to the outside of the case 104.
Further, a shaft part 112c and a large diameter part 112d are formed at the other end 112b of the dummy terminal 112, similar to the positive electrode terminal 105 and the negative electrode terminal 106. The other tab 102c of two tabs 102b and 102c of the negative electrode plate 102 is a dummy tab, and the tabs 102c are gathered to form the negative electrode tab bundle 103c. And the shaft part 112c of the dummy terminal 112 is inserted into the through-hole 102e to sandwich and to fix the dummy tab between the other end 112b and the large diameter part 112d. In addition, the large diameter parts 105d, 106d and 112d of the positive electrode terminal 105, the negative electrode terminal 106 and the dummy terminal 112 are formed by deforming parts of the corresponding shaft parts 105c, 106c and 112c, respectively, in a manufacturing apparatus described later.

Hereinafter, a secondary battery manufacturing apparatus 1 for manufacturing the secondary battery 100 will be described.

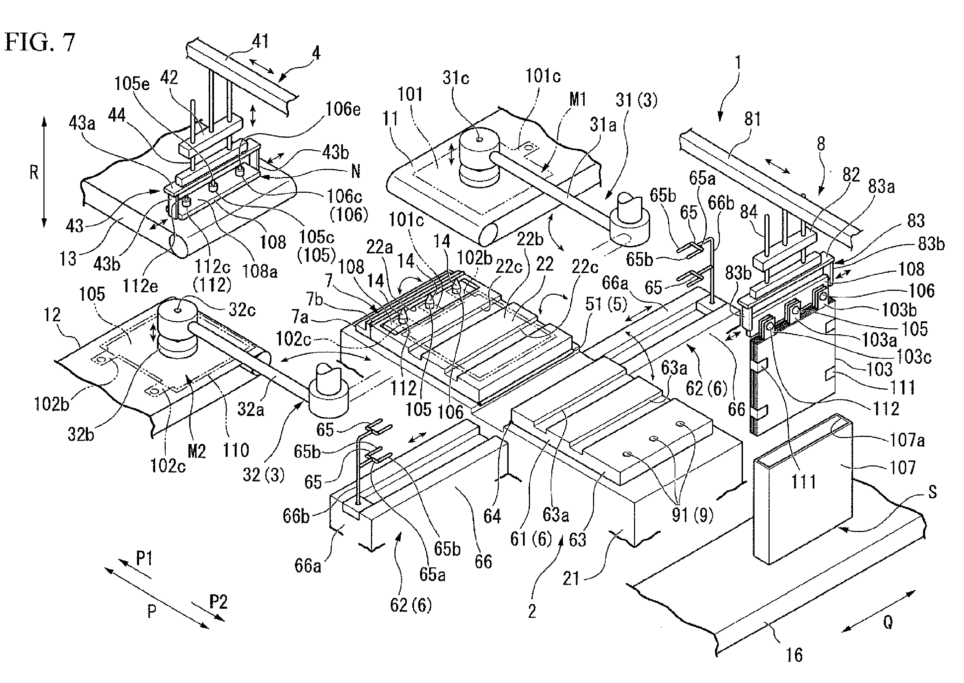

FIG. 7 shows the secondary battery manufacturing apparatus 1 of the embodiment. As shown in FIG. 7, the secondary battery manufacturing apparatus 1 includes a worktable 2 on which a positive electrode plate 101 and a negative electrode plate 102 are placed, an electrode plate conveyance unit 3 to convey the positive electrode plate 101 and the negative electrode plate 102 to the worktable 2 for forming an electrode body 103, a cover conveyance unit 4 to convey a cover 108 to the worktable 2, a standing-up unit 5 to stand the electrode body 103 up, a stacking/fixing unit 6 to integrally fix the stacked positive electrode plate 101 and negative electrode plate 102, a tab fixing unit 7 to fix tabs 101b, 102b and 102c to corresponding terminals, and an storing unit 8 to store the electrode body 103 into a case 104.

The worktable 2 includes a main stage 21, and a placing plate 22 arranged on the main stage 21 and on which the positive electrode plate 101 and the negative electrode plate 102 are placed. The placing plate 22 is placed in order that the Z-axis direction, in which the tabs 101b, 102b and 102c protrude is directed to a P direction shown in FIG. 7.
The placing plate 22 includes a cover fixing part 22a having a concave part concaved in order that the cover 108 is fitted thereinto, and an electrode plate disposing part 22b arranged at a P2 direction in the P direction from the cover fixing part 22a and on which the positive electrode plate 101 and the negative electrode plate 102 are placed.
The concave part having substantially the same width in the P direction as a width in the X-axis direction (see FIG. 1) of the cover 108 is formed at the cover fixing part 22a, in order that the cover 108 is fitted thereinto. A longitudinal direction of the concave part is directed to a Q direction perpendicular to the P direction. The concave part is designed to have a length larger than a width in the Y-axis direction (see FIG. 1) of the cover 108, in order that the cover 108 can be fitted into the cover fixing part 22a while the cover 108 is gripped by the cover conveyance unit 4.
In addition, the electrode plate disposing part 22b has a groove 22c formed in the Q direction perpendicular to the P direction. The groove 22c is formed to pass through both edges of the placing plate 22. In this embodiment, two grooves are arranged in the P direction.

Further, a first rotary shaft 51 is arranged along the Q direction at an edge of the placing plate 22 in the P direction, and a rotation drive part (hereinafter, it is called as a first rotation drive part) is arranged to rotate the first rotary shaft 51, although the rotation drive part is not shown. The placing plate 22 can be rotated to stand up with the stacked electrode body 103, while the cover fixing part 22a is arranged at the upper side of the placing plate 22. The standing-up unit 5 to stand the electrode body 103 up is formed by the first rotary shaft 51 and the first rotation drive part.

The electrode plate conveyance unit 3 includes a positive electrode plate conveyance part 31 to convey the positive electrode plate 101, and a negative electrode plate conveyance part 32 to convey the negative electrode plate 102, which are arranged at both sides of the worktable 2 in the Q direction. The positive electrode plate conveyance part 31 and the negative electrode plate conveyance part 32 have electrode plate conveyance arm parts 31 a and 32a, that are movable between electrode plate receiving positions M1, M2, and the electrode plate disposing part 22b of the worktable 2. At the positions M1 and M2, the corresponding positive electrode plate 101 or the negative electrode plate 102 is received. Further, the electrode plate conveyance unit 3 includes electrode plate hand parts 31b and 32b formed at front ends of the electrode plate conveyance arm parts 31a and 32a to attach/detach the positive electrode plate 101 or the negative electrode plate 102. And the electrode plate conveyance unit 3 includes electrode plate up/down positioning parts 31c and 32c to adjust the positions of the electrode plate hand parts 31b and 32b in an R direction, which is an up/down direction. The electrode plate hand parts 31b and 32b are, for example, suction pads to suction the positive electrode plate 101 or the negative electrode plate 102 by the vacuum suction.

The positive electrode plate 101 and the negative electrode plate 102 are sequentially conveyed to the corresponding electrode plate receiving positions M1 and M2 by, for example, electrode plate-conveying conveyor belts 11 and 12.
The positive electrode plate 101 and the negative electrode plate 102 are formed by punching an electrode sheet having a large length before the conveyance. At this time, the through-holes are simultaneously formed at the tabs when the main bodies of the electrode plates are formed by the punching. Specifically, the main bodies, the tabs and the through-holes are able to be formed by the same mold.
In the related art, after the positive electrode plate and the negative electrode plate are stacked, the through-holes are formed. Therefore, scrap metals like burrs may be mixed in the battery and cause a failure of the battery. However, as described above, because the through-holes are formed simultaneously when the positive electrode plate 101 and the negative electrode plate 102 are formed, the burrs do not be formed. This is because the burrs cannot be easily generated when only one tab is punched and the through-hole is formed, although the burrs may be easily generated when the plurality of tabs are gathered and punched.
In addition, because the through-holes are formed in the positive electrode plate and the negative electrode plate by using the same mold, when one of the two types of the electrode plates are considered, positions of the through-holes formed in the tabs of the plurality of stacked positive electrode plates (or the plurality of negative electrode plates) may be unified. That is, a position error of the through-holes of the tabs of the plurality of electrode plates can be prevented respectively.

The electrode plate-conveying conveyor belts 11 and 12 convey the corresponding positive electrode plate 101 or negative electrode plate 102 to the electrode plate receiving positions M1 and M2, in order that the direction in which the tabs 101b, 102b and 102c protrude becomes a P1 direction in the P direction, when the positive electrode plate 101 or the negative electrode plate 102 is conveyed and placed on the worktable 2 from the electrode plate receiving positions M1 and M2 by the corresponding positive electrode plate conveyance part 31 or the corresponding negative electrode plate conveyance part 32.
More specifically, in this embodiment, as the electrode plate conveyance arm parts 31 a and 32a of the positive electrode plate conveyance part 31 and the negative electrode plate conveyance part 32 are rotated about 90° around the rotary shafts thereof, the arm parts can move to the electrode plate disposing part 22a of the worktable 2 from the electrode plate receiving positions M1 and M2.

The cover conveyance unit 4 is arranged adjacent to the place of the worktable 2, where the tabs 101b, 102b and 102c are to be arranged toward the P1 direction in the P direction. The cover conveyance unit 4 includes a cover conveyance guide part 41 arranged along the P direction, a cover slider 42 that is movable along the cover conveyance guide part 41 between a cover receiving position N in which the cover 108 is received and the worktable 2, a cover hand part 43 arranged at the cover slider 42 to attach/detach the cover 108, and a cover up/down positioning part 44 to adjust the position of the cover hand part 43 with respect to the cover slider 42 in the R direction.

The cover hand part 43 has a base part 43a along the Q direction, and a pair of holding pieces 43b that are slidable along the base part 43a. A distance between the pair of holding pieces 43b can be reduced along the base part 43a to hold the cover 108. The cover hand part 43 may be formed with a suction pad by using the vacuum suction, similar to the cases of the positive electrode plate 101 or the negative electrode plate 102.

The covers 108 are sequentially conveyed to a cover receiving position N by, for example, a cover-conveying conveyor belt 13. In addition, the cover 108 is conveyed by the cover-conveying conveyor belt 13, while the inner surface 108a of the cover 108 is directed upward.
When the cover 108 is conveyed to the cover receiving position N by the cover-conveying conveyor belt 13, the positive electrode terminal 105, the negative electrode terminal 106 and the dummy terminal 112 of the cover 108 have no enlarged diameter parts 105d, 106d and 112d. At the front ends of the shaft parts 105c, 106c and 112c, front end small diameter parts 105e, 106e and 112e are formed, that have smaller diameters than the shaft parts 105c, 106c and 112c and becoming parts of the enlarged diameter parts 105d, 106d and 112d.

In addition, the stacking/fixing unit 6 includes a temporary fixing unit 61 to temporarily fix the electrode body 103 stood-up by the standing-up unit 5, and tape adhering unit 62 to fix the temporarily fixed electrode body 103 by using a fixing tape 111.
The temporary fixing unit 61 includes a holding plate 63 arranged adjacent to the placing plate 22 (i.e., the P2 direction in the P direction) on the main stage 21 of the worktable 2, and a second rotary shaft 64 arranged at an edge of the holding plate 63 along the Q direction to rotate the holding plate 63 on the main stage 21, although the edge is one edge existed to the P1 direction between two edges of the holding plate 63 existed in the P direction. Further, the temporary fixing unit 61 includes a rotation drive part (hereinafter, it is called as a second rotation drive part) to rotate the second rotary shaft 64, although the second rotation drive part is not shown. The holding plate 63 is arranged at a position in order that the electrode body 102 on the placing plate 22 can be sandwiched between the holding plate 63 and the placing plate 22 stood-up by the standing-up unit 5, when the holding plate 63 is rotated around the second rotary shaft 64. In addition, a groove 63a is formed on the holding plate 63 at a position opposite to the groove 22c formed on the placing plate 22. The groove 63a is formed to pass through the both edges along the Q direction.

Further, two of the tape adhering units 62 are arranged at both sides of the worktable 2 to sandwich the worktable 2 in the Q direction. The tape adhering unit 62 includes an adhering mechanism 65 to adhere the fixing tape 111 to the electrode body 103, and an advance/retreat mechanism 66 to move the adhering mechanism 65 forward to and backward from the worktable 2 in the Q direction. The advance/retreat mechanism 66 includes an advance/retreat guide part 66a arranged in the Q direction, and an advance/retreat member 66b having the the adhering mechanism 65 formed at a front end thereof and moving forward and backward by the advance/retreat guide part 66a in the Q direction. Two adhering mechanisms 65 are respectively arranged at upper part and a lower part of the advance/retreat member 66b corresponding to the groove 22c of the placing plate 22 and the groove 63a of the holding plate 63.

The adhering mechanism 65 includes a base piece 65a having a length corresponding to a thickness of the electrode body 103 and being arranged in the P direction, and a pair of projecting pieces 65b protruding from both ends of the base piece 65a in the Q direction. The U shape is formed by the base piece 65a and the pair of projecting pieces 65b.
As the adhering mechanism 65 moves toward the worktable 2 by the advance/retreat mechanism 66, the projecting pieces 65b can be inserted into the groove 22c of the placing plate 22 stood-up by the standing-up unit 5 and the groove 63a of the holding plate 63 rotated to face the placing plate 22, respectively. Further, the projecting pieces 65b are able to slide along the base piece 65a.
The fixing tape 111 is arranged inside of the U-shaped portion to be extended from the one projecting piece 65b to the other projecting piece 65b via the base piece 65a. An adhering part of the fixing tape 111 is directed toward the inside of the U-shaped portion.
According to this configuration, after the projecting pieces 65b are inserted into the grooves 63a respectively, the pair of projecting pieces 65b are slid to each other to press and sandwich the electrode body 103. Therefire, the fixing tape 111 is adhered to the electrode body 103.

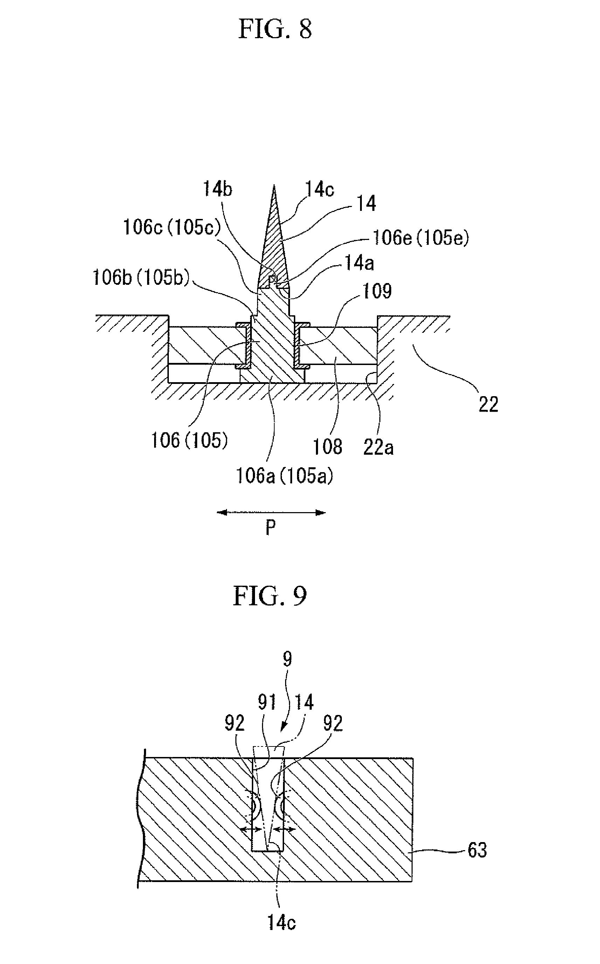

In the holding plate 63, a guide member attachment/detachment unit 9, which attaches and detaches a guide member 14 (to be described later) to and from positions corresponding to the positive electrode terminal 105, the negative electrode terminal 106 and the dummy terminal 112 of the cover 108 fixed to the cover fixing part 22a, is formed at a position corresponding to the cover fixing part 22a formed at the placing plate 22.
Here, as shown in FIG. 8, in this embodiment, the guide member 14 has a conical shape. The guide member 14 includes a bottom surface 14a, which is a base end, having a concave part 14b fitted onto the front end small diameter parts 105e, 106e and 112e of the positive electrode terminal 105, the negative electrode terminal 106 and the dummy terminal 112 of the cover 108, in which the enlarged diameter parts 105d, 106d and 112d are not yet formed. The diameter of the bottom surface 14a of the guide member 14 is set to be substantially the same as the diameters of the shaft parts 105c, 106c and 112c.

As shown in FIG 9, specifically, the guide member attachment/detachment unit 9 includes an insertion groove 91 into which a front end 14c of the guide member 14 is inserted, and chuck parts 92 formed inside the insertion groove 91 and being able to sandwich the front end 14c of the inserted guide member 14. As shown in FIG. 7, when the placing plate 22 and the holding plate 63, that are stood-up by the standing-up unit 5 are faced to each other, the insertion grooves 91 are faced to the positive electrode terminal 105, the negative electrode terminal 106 and the dummy terminal 112 of the cover 108 fitted into the cover fixing part 22a of the placing plate 22. Therefore, the guide members 14 at the terminals are inserted into the insertion grooves 91 corresponding thereto, and the guide members 14 can be delivered and received between the terminals and the chuck parts 92 inside the insertion grooves 91.

As shown in FIG. 7, the tab fixing unit 7 includes a pressing plate 7a arranged at the P1 side of the placing plate 22 in the P direction, a third rotary shaft 7b arranged at an edge of the P1 side of the placing plate 22 in the P direction and being able to rotate the pressing plate 7a about the Q direction as an axial, and a rotation drive part (i.e., a third rotation drive part) (not shown) to rotate the third rotary shaft 7b.
As described later, after the positive electrode plate 101 and the negative electrode plate 102 are stacked on the placing plate 22 and the guide member 14 is separated from the positive electrode terminal 105, the negative electrode terminal 106 and the dummy terminal, the pressing plate 7a is rotated around the third rotary shaft 7b. And then, the front ends of the shaft parts 105c, 106c and 112c of the positive electrode terminal 105, the negative electrode terminal 106 and the dummy terminal 112 of the cover 108 fixed to the cover fixing part 22a are pressed and caulked by the pressing plate 7a to form the enlarged diameter parts 105d, 106d and 112d.

The storing unit 8 includes an storing guide part 81 arranged in the P direction, and an storing slider 82 movable to an storing position S, at which the electrode body 103 is to be stored in the case body 107 from the upperside of the worktable 2. Further, the storing unit 8 includes an storing hand part 83 arranged at the storing slider 82 to attach and detach the cover 108, and an storing up/down positioning part 84 to adjust the position of the storing hand part 83 with respect to the storing slider 82 in the R direction.
Here, the case bodies 107 are sequentially conveyed to the storing position S by, for example, a case body-conveying conveyor belt 16. At this time, the opening 107a is arranged to be directed upward.

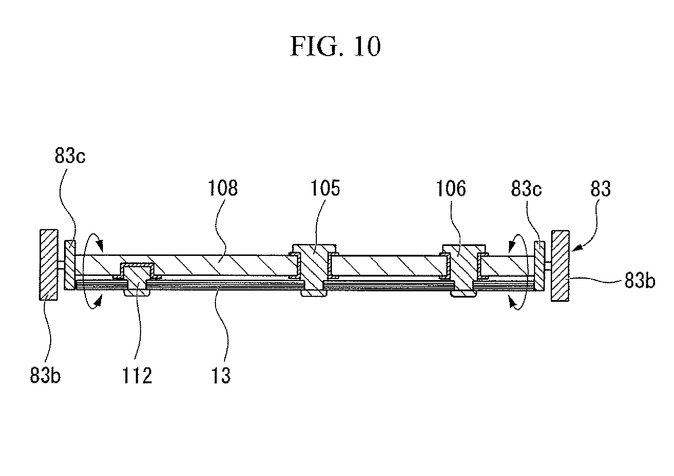

The storing hand part 83 includes a base part 83a arranged in the Q direction, and a pair of holding pieces 83b that are slidable along the base part 83a. When a spacing distance between the pair of holding pieces 83b is reduced along the base part 83a, the cover 108 can be held in the Q direction.
Here, as shown in FIG. 10, contact plates 83c are rotatably supported at positions to hold the cover 108, and arranged at the pair of holding pieces 83b of the storing hand part 83, respectively. Accordingly, when the cover 108 is held by the pair of holding pieces 83b, the contact plates 83c come in contact with the cover 108 in order that a direction of the cover 108 with respect to the holding pieces 83b can be changed by rotation of the contact plates 83c.

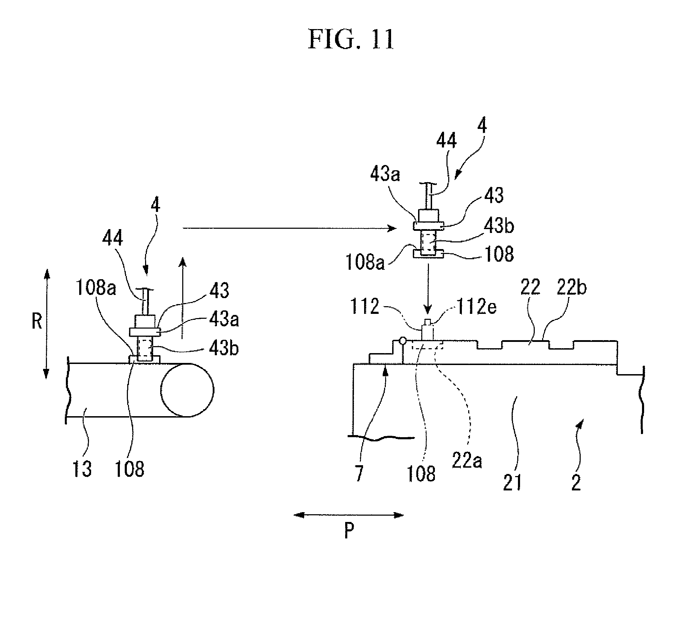

Hereinafter, an operation of the apparatus 1 for manufacturing the secondary battery 100 of the embodiment will be described with reference to FIGS. 11 to 18.
First, as a preparation process, the positive electrode plate 101 and the negative electrode plate 102 are prepared, and the cover 108 and the case body 107 are also prepared. Then, the prepared positive electrode plate 101 and the negative electrode plate 102 are sequentially conveyed to the corresponding electrode plate receiving positions M1 or M2 respectively by the corresponding electrode plate-conveying conveyor belts 11 or 12. Then, the prepared cover 108 is sequentially conveyed to the cover receiving position N by the cover-conveying conveyor belt 13. Next, the prepared case body 107 is sequentially conveyed to the storing position S by the case body-conveying conveyor belt 16.
Here, in the cover 108 conveyed to the cover receiving position N, the positive electrode terminal 105, the negative electrode terminal 106 and the dummy terminal 112 do not have the enlarged diameter parts 105d, 106d and 112d, and the front end small diameter parts 105e, 106e and 112e protrude from the shaft parts 105c, 106c and 112c.

In addition, as shown in FIG. 11, the cover 108, conveyed to the cover receiving position N by the cover conveyance unit 4, is conveyed to the cover fixing part 22a of the placing plate 22 of the worktable 2. That is, at the cover receiving position N, the cover 108 is held by the pair of holding pieces 43b of the cover conveyance unit 4. Then, the held cover 108 is conveyed over the cover fixing part 22a on the placing plate 22 of the worktable 2 in the P direction. Next, when the cover 108 is lowered by the cover up/down positioning part 44, the cover 108 is fitted and fixed to the cover fixing part 22a in order that the inner surface 108a of the cover 108 is received upward.

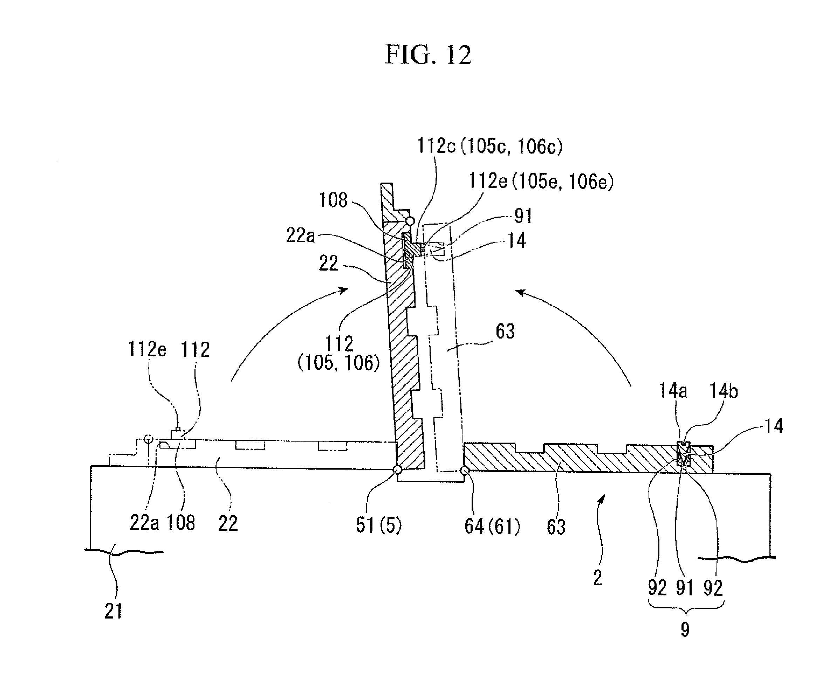

Next, as shown in FIG. 12, the guide members 14 are mounted on the positive electrode terminal 105, the negative electrode terminal 106 and the dummy terminal 112 of the cover 108 on the worktable 2, respectively. The front ends 14c of the guide members 14 are inserted into the insertion groove 91 of the guide member attachment/detachment unit 9 formed at the holding plate 63 in order that the guide member 14 is held by the chuck parts 92. Then, the placing plate 22 is rotated around the first rotary shaft 51 of the standing-up unit 5, and the holding plate 63 is also rotated around the second rotary shaft 64 of the temporary fixing unit 61 in order that the placing plate 22 and the holding plate 63 face each other. Accordingly, the concave parts 14b of the lower surfaces 14a of the guide members 14 inserted into the insertion parts 91, are fitted onto the front end small diameter parts 105e, 106e and 112e of the positive electrode terminal 105, the negative electrode terminal 106 and the dummy terminal 112 of the cover 108 fixed to the cover fixing part 22a. After that, the chuck parts 92 of the guide member attachment/detachment unit 9 release the guide members 14.
Then, when the holding plate 63 is rotated around the second rotary shaft 64 to return to its original position from the stood-up state, the guide members 14 are separated from the insertion grooves 91 with the guide members 14 mounted on the front end small diameter parts 105e, 106e and 112e. Next, the placing plate 22 is also rotated around the first rotary shaft 51 to return to its original position from the stood-up state.

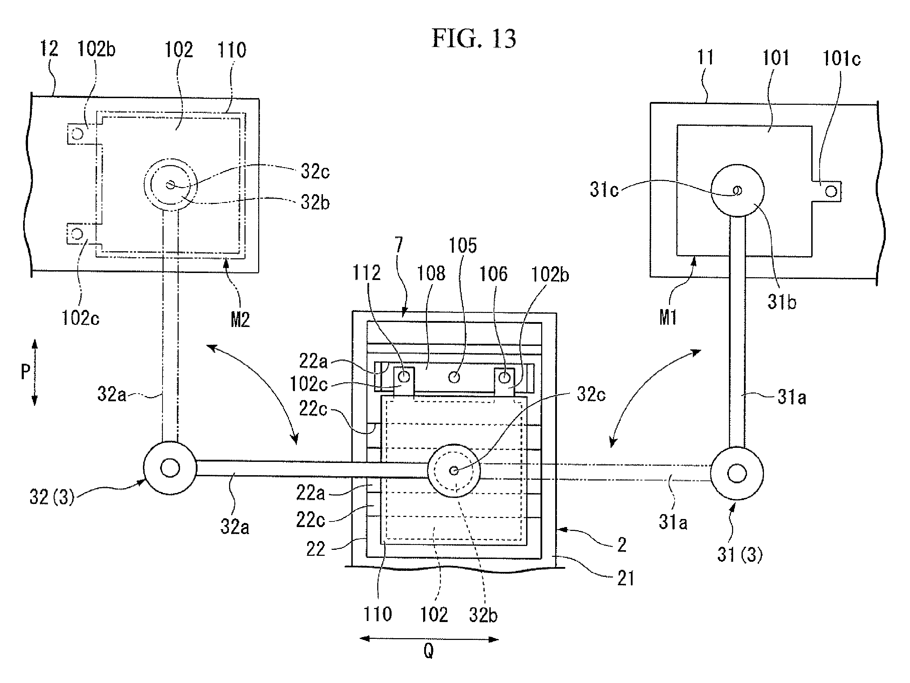

Next, as shown in FIG. 13, as a stacking process, the positive electrode plate 101 and the negative electrode plate 102 are alternately stacked in order that the tabs 101b, 102b and 102c protrude in the same direction toward the P1 side in the P direction. That is, in the positive electrode plate conveyance part 31 and the negative electrode plate conveyance part 32 of the electrode plate conveyance unit 3, for example, the positive electrode plate conveyance part 31 is driven first. The positive electrode plate conveyance part 31 grips the positive electrode plate 101 conveyed to the corresponding electrode plate receiving position M1 by using the electrode plate hand part 31b, rotates an electrode plate conveyance arm part 31 a, and moves the positive electrode plate 101 over the electrode plate disposing part 22b of the worktable 2.
Next, when the gripped positive electrode plate 101 is lowered to the electrode plate disposing part 22b by the electrode plate up/down positioning part 31 c (the positive electrode disposing part), the through-hole 101 c of the tab 101b is inserted onto the shaft part 105c of the positive electrode terminal 105, and the positive electrode plate 101 is arranged at the electrode plate disposing part 22b. At this time, because the guide member 14 with a pointed tip and having an enlarged diameter toward the positive electrode terminal 105 is mounted on the positive electrode terminal 105, the shaft part 105c of the positive electrode terminal 105 can be easily inserted into the through-hole 101c of the tab 101b with minimal conveyance precision to enable precise position control thereof.

Next, the negative electrode plate conveyance part 32 is driven.
The negative electrode plate conveyance part 32 grips the negative electrode plate 102 conveyed to the corresponding electrode plate receiving position M 1 by using the electrode plate hand part 32b, rotates the electrode plate conveyance arm part 32a, and moves the negative electrode plate 102 over the electrode plate disposing part 22b of the worktable 2.
Then, when the gripped negative electrode plate 102 is lowered to the electrode plate disposing part 22b by the electrode plate up/down positioning part 32c (the negative electrode plate disposing part), the negative electrode plate 102 is arranged on the electrode plate disposing part 22b, while the through-hole 102d of the tab 102b is inserted onto the shaft part 106c of the negative electrode terminal 106 and the through-hole 102e of the tab 102c is inserted onto the shaft part 112c of the dummy terminal 112.
Even at this time, the guide members 14 are mounted on the negative electrode terminal 106 and the dummy terminal 112, respectively. Therefore, they are precisely positioned, while the shaft parts 106c and 112c of the negative electrode terminals 106 are easily inserted into the through-holes 102d and 102e of the tabs 102b and 102c with minimal conveyance precision.
As mentioned above, when the positive electrode plate 101 and the negative electrode plate 102 are alternately conveyed by the positive electrode plate conveyance part 31 and the negative electrode plate conveyance part 32, the shaft part 105c of the corresponding positive electrode terminal 105, the shaft part 106c of the corresponding negative electrode terminal 106 and the shaft part 112c of the corresponding dummy terminal 112 are inserted into the corresponding through-holes 101c, 102d and 102e of the tabs 101 b, 102b and 102c, respectively. The positive electrode plate 101 and the negative electrode plate 102 are alternately stacked to form the electrode body 103 with keeping the shaft parts inserted into the corresponding through-holes.

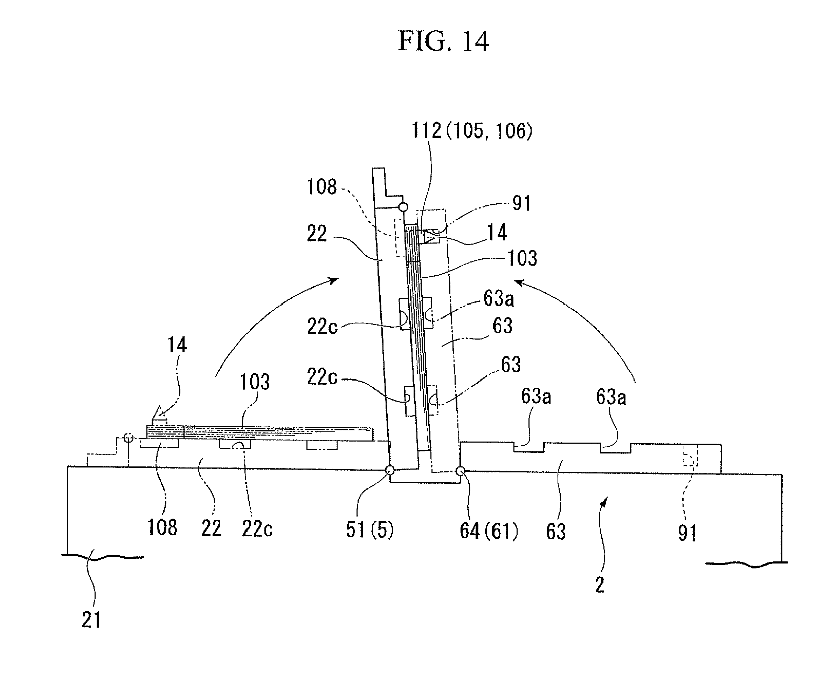

Next, as shown in FIG. 14, the positive electrode tab bundle 103a and the negative electrode tab bundles 103b and 103c of the electrode body 103 are supported to hang the positive electrode plates 101 and the negative electrode plates 102. That is, the standing-up unit 5 rotates the placing plate 22 around the first rotary shaft 51 to stand the placing plate 22 up. At this time, because the shaft parts 105c, 106c and 112c of the positive electrode terminal 105, the negative electrode terminal 106 and the dummy terminal 112 are inserted into the through-holes 101c, 102d and 102e of the tabs 101 b, 102b and 102c of the positive electrode plate 101 and the negative electrode plate 102 respectively, the positive electrode tab bundle 103a and the negative electrode tab bundle 103b and 103c are hung with supported by the shaft parts 105c, 106c and 112c.
Although the placing plate 22 may be stood-up vertically by the standing-up unit 5, it is preferable that the placing plate 22 is slightly inclined. Here, in each of the positive electrode plate 101 and the negative electrode plate 102, the tabs 101b, 102b and 102c are line-symmetrical with respect to the centerline L101 of the positive electrode plate 101 or the centerline L 102 of the negative electrode plate 102, that passes the coresponding center of gravity. Accordingly, each of the positive electrode plate 101 and the negative electrode plate 102 supported and hung by the positive electrode tab bundle 103a and the negative electrode tab bundles 103b and 103c is automatically positioned in order that directions of the centerlines L101 and L102 correspond each other due to gravity. When the positions of the centerlines as well as the directions of the centerlines correspond or overlap each other, because the positive electrode plate 101 and the negative electrode plate 102 are positioned and stacked to overlap each other at their center positions substantially, a stacking error may be prevented.
At this time, because the tabs of the positive electrode plate 101 and the tabs of the negative electrode plate 102 are arranged not to overlap each other, the short circuit is prevented between the tab of the positive electrode plate 101 and the tab of the negative electrode plate 102.
Here, the standing-up unit 5 may have a vibration induction part such as a vibration motor, and the like. The vibration induction part can cause vibrations to the positive electrode plates 101 and the negative electrode plates 102 on the placing plate 22, and a frictional force between the stacked positive electrode plate 101 and the stacked negative electrode plate 102 can be reduced by the vibrations to more effectively perform the positioning. Therefore, the stacking error is able to be prevented effectively.

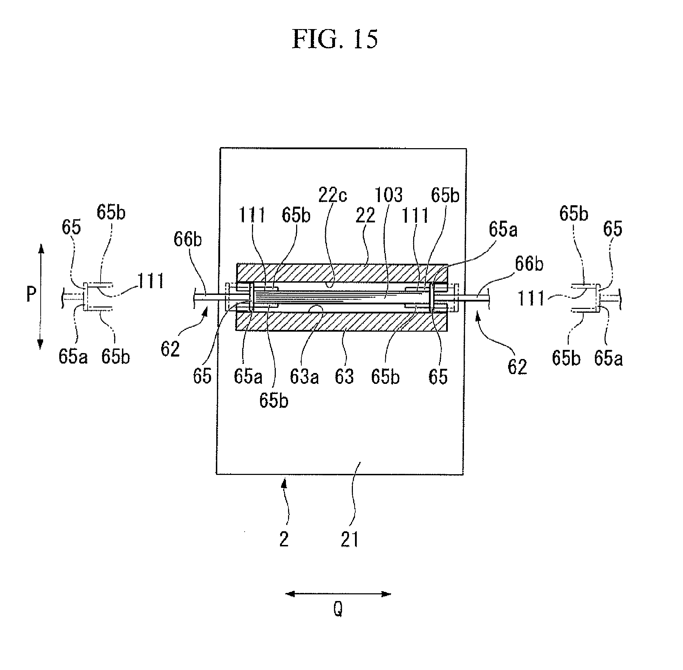

Next, the positive electrode plates 101 and the negative electrode plates 102 are integrally fixed after they are stacked.
First, as shown in FIG. 14, in the stacking/fixing unit 6, the electrode body 103 is temporarily fixed by the temporary fixing unit 61. That is, as the holding plate 63 is rotated around the second rotary shaft 64 to face the placing plate 22, the electrode body 103 is sandwiched and pressed by the placing plate 22 and the holding plate 63. Accordingly, the positive electrode plates 101 and the negative electrode plates 102 are temporarily fixed so as not to be displaced from their stacked positions after the electrode plates are positioned by the hanging.
Next, as shown in FIG. 15, the fixing tape 111 is adhered to the electrode body 103 by the tape adhering unit 62. That is, while the electrode body 103 is held between the placing plate 22 and the holding plate 63, the adhering mechanism 65 advances toward the worktable 2 by the advance/retreat mechanism 66 of the tape adhering unit 62 to insert the projecting plates 65b into the grooves 22c and 63a of the placing plate 22 and the holding plate 63.
Then, a width between the pair of projecting plates 65b is made narrower. Therefore, the fixing tapes 111 are adhered to the edges of the electrode body 103 into a U shape, that is arranged between the projecting plates 65b. That is, the electrode body 103 is integrally fixed after positioning by the hanging.

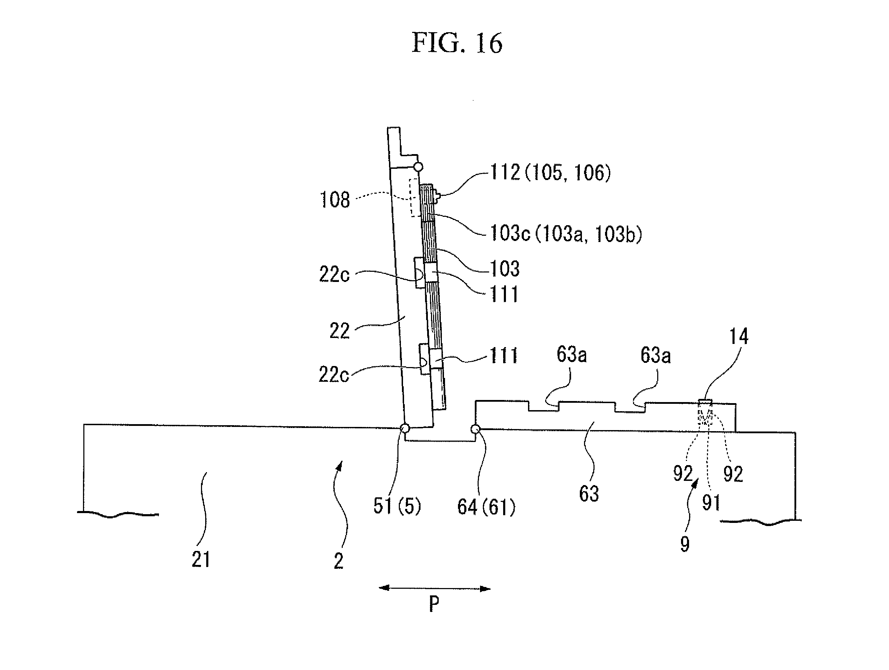

Next, the guide members 14 are separated from the positive electrode terminal 105, the negative electrode terminal 106 and the dummy terminal 112 of the cover 108, respectively. That is, when the electrode body 103 is held by the placing plate 22 and the holding plate 63, the front end 14c of the guide member 14 is inserted into the insertion part 91 of the guide member attachment/detachment unit 9 (see FIG. 14). Then, while the front end 14c of the guide member 14 is kept to be inserted into the insertion part 9, the guide member 14 is held by the chuck parts 92. Next, the holding plate 63 is rotated around the first rotary shaft 51 to be spaced from the placing plate 22. At this time, as shown in FIG 16, the guide members 14 held by the chuck parts 92 are separated from the positive electrode terminal 105, the negative electrode terminal 106 and the dummy terminal 112, and retreated with the holding plate 63. Therefore, on the placing plate 22, the front ends of the shaft parts 105c, 106c and 112c protrude from the positive electrode tab bundle 103a and the negative electrode tab bundles 103b and 103c. In addition, the guide members 14 retreated with the holding plate 63 are used upon assembly of another new secondary battery 100.
Next, the placing plate 22 is rotated around the first rotary shaft 51 of the standing-up unit 5 to return the placing plate 22 to the state placed on the main stage 21.

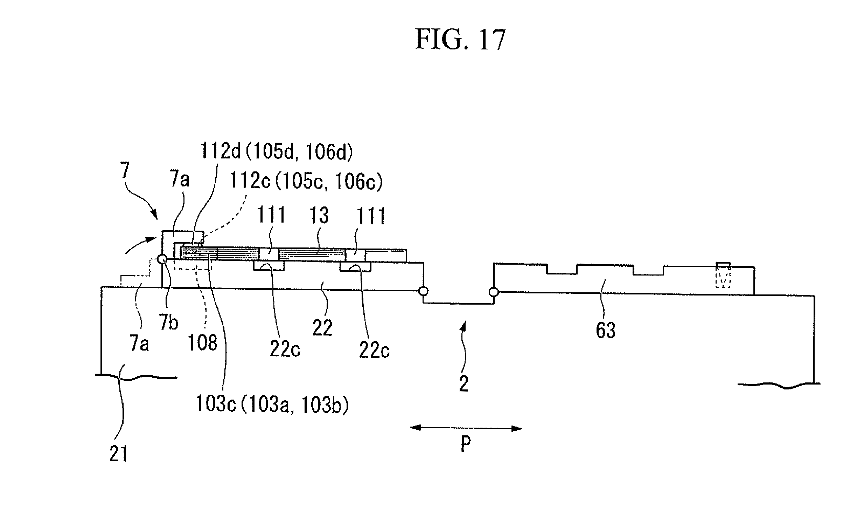

Next, as shown in FIG. 17, the positive electrode tab bundle 103a and the negative electrode tab bundles 103b and 103c are fixed to the corresponding terminals, respectively. That is, the pressing plate 7a of the tab fixing unit 7 is rotated around the third rotary shaft 7b to face the placing plate 22. Accordingly, the front end sides of the shaft parts 105c, 106c and 112c protruding from the tabs 101 b, 102b and 102c and also including the front end small diameter parts 105e, 106e and 112e are pressed and deformed to form the enlarged diameter parts 105d, 106d and 112d. Accordingly, the tabs 101b, 102b and 102c are fitted and fixed between the enlarged diameter parts 105d, 106d and 112d and the other ends 105c, 106c and 112c, although the corresponding shaft parts 105c, 106c, 112c are inserted into the through-holes 101c, 102d and 102e.

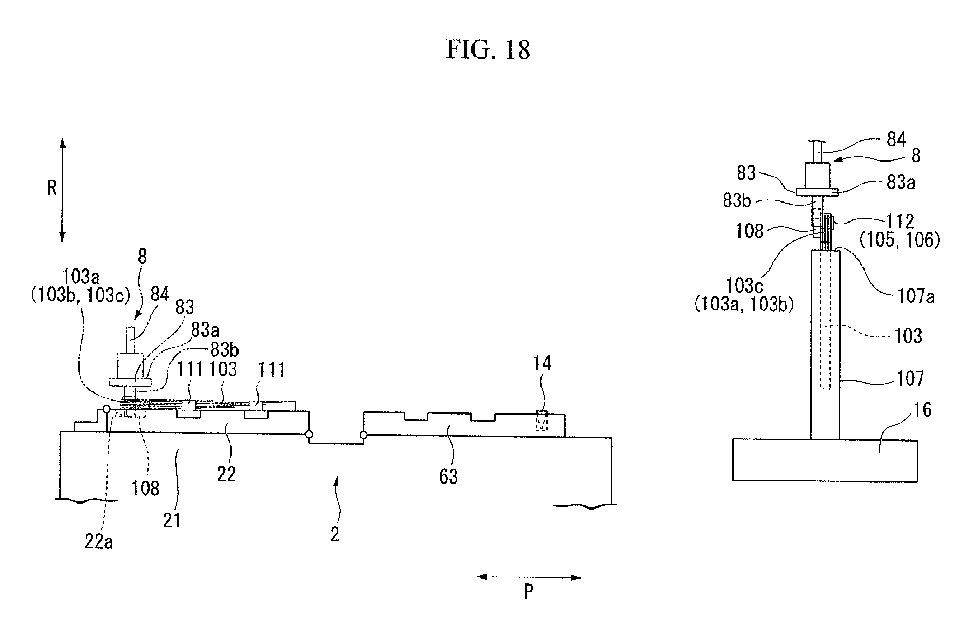

Next, the electrode body 103 is accommodated in the case body 107. That is, as shown in FIG. 18, the pair of holding pieces 83b of the storing hand part 83 of the storing unit 8 are inserted into gaps formed at both sides of the cover 108 of the cover fixing part 22a in the Q direction to hold the cover 108. Then, as the storing hand part 83 is moved upward by the storing up/down positioning part 84, the cover 108 held by the storing hand part 83 is separated from the cover fixing part 22a so that the electrode body 103 constituted by the positive electrode plate 101 and the negative electrode plate 102 fixed to the positive electrode terminal 105, the negative electrode terminal 106 and the dummy terminal 112 of the cover 108 is further separated therefrom. Accordingly, the cover 108 and the electrode body 103 are hung by the storing unit 8 in a state held by the storing hand part 83, moved in the P direction, and conveyed to the storing position S. Then, at the storing position S, as the electrode body 103 is lowered by the storing up/down positioning part 84 from above the case body 107, the electrode body 103 is inserted into the case body 107 from the opening 107a thereof.

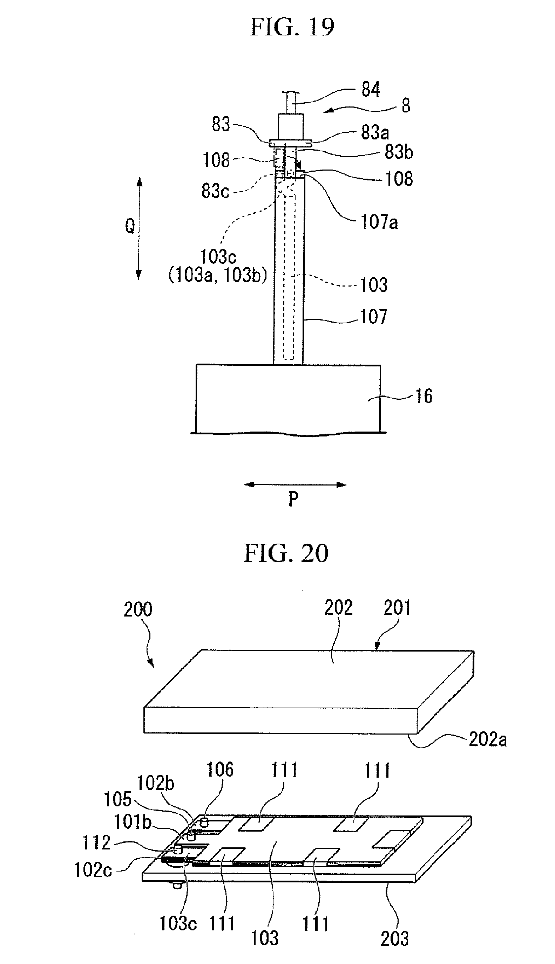

Next, as shown in FIG. 19, as the electrode body 103 and the cover 108 are further lowered by the storing up/down positioning part 84, the electrode body 103 is completely accommodated into the case body 107, the positive electrode tab bundle 103a and the negative electrode tab bundles 103b and 103c are folded to be accommodated in the case body 107, and the cover 108 is arranged at the opening 107a of the case body 107. At this time, because the cover 108 can be rotated with respect to the storing hand part 83 by the contact plate 83c formed at the storing hand part 83 of the storing unit 8 as described above, the cover 108 is changed in direction to close the opening 107a of the case body 107 to be arranged at the opening 107a, closing the case body 107.

As described above, according to the apparatus 1 for manufacturing the secondary battery of the embodiment, in the positive electrode plate 101 and the negative electrode plate 102, one or two or more tabs are formed to be line-symmetrical with respect to the centerlines L101 and L102 of the main bodies 101a and 102a, and the plates are hung by standing-up unit 5, so that the positive electrode plate 101 and the negative electrode plate 102 can be precisely and effectively stacked to manufacture the secondary battery 100 without a stacking error, even when the plates have different sizes.
In addition, because the cover fixing part 22a is formed at the placing plate 22 of the worktable 2 at which the positive electrode plate 101 and the negative electrode plate 102 are stacked, the cover 108 conveyed by the cover conveyance unit 4 can be fixed to the cover fixing part 22a on the worktable 2. Accordingly, the positive electrode plate 101 and the negative electrode plate 102 are conveyed by the electrode plate conveyance unit 3, and the tabs 101b, 102b and 102c can be fixed onto the cover 108.
Then, upon the hanging, the positive electrode plate 101 and the negative electrode plate 102 can be positioned with respect to each other by the standing-up unit 2 in a state supported by the cover 108.
In addition, when the positive electrode plate 101 and the negative electrode plate 102 are conveyed by the electrode plate conveyance unit 3 to pass the corresponding positive electrode terminal 105 or negative electrode terminal 106 through the through-holes 101 c, 102d and 102e of the tabs 101b, 102b and 102c, because the guide members 14 having a conical shape are fixed to the positive electrode terminal 105 and the negative electrode terminal 106, the positive electrode terminal 105 or the negative electrode terminal 106 may easily pass through the through-holes 101c, 102d and 102e of the tabs 101b, 102b and 102c with minimal conveyance precision. In addition, after the positive electrode plate 101 and the negative electrode plate 102 are stacked, the guide members 14 are separated by the guide member attachment/detachment unit 9, and thus, the guide members 14 do not interfere with the following operation of the tab fixing unit 7.

Further, as described above, while the secondary battery 100 and the secondary battery manufacturing apparatus 1 of the present invention have been described, the present invention is not limited thereto but various embodiments may be considered.
FIG. 20 shows another embodiment of a secondary battery. As shown in FIG. 20, in a secondary battery 200 of the embodiment, a case 201 has a case body 202 having an opening 202a at one side in a stacking direction X, and a cover 203 configured to close the opening 202a. Because the cover 203 is configured to close the opening 202a, the cover 203 has an area larger than a positive electrode plate 101 and a negative electrode plate 102 accommodated in the case body 202. In addition, also in this embodiment, a positive electrode terminal 105, a negative electrode terminal 106 and a dummy terminal 112 are formed at the cover 203. Here, the positive electrode terminal 145, the negative electrode terminal 106 and the dummy terminal 112 passing through the cover 203 also project in the X direction.

In the secondary battery 200 shown in FIG. 20, main bodies 101a and 102a as well as tabs 101b, 102b and 102c are placed on the cover 203 such that the positive electrode plate 101 and the negative electrode plate 102 can be alternately stacked. Accordingly, the cover 203 and the electrode body 103 can be integrally and easily treated.
In addition, when the electrode body 103 is accommodated in the case body 107, because there is no need to convey/insert the hanging electrode body 103 and it is sufficient to cover the case body 202 from above the cover 203, an operation becomes easier.
Further, even after the opening 202a of the case body 202 is closed by the cover 203, the tabs 101b, 102b and 102c are not folded but may be arranged without variation in direction. As a result, in a state accommodated in the case 201, there is no chance of damage to the tabs 101b, 102b and 102c due to generation of a tensile or compression stress caused by bending the tabs.

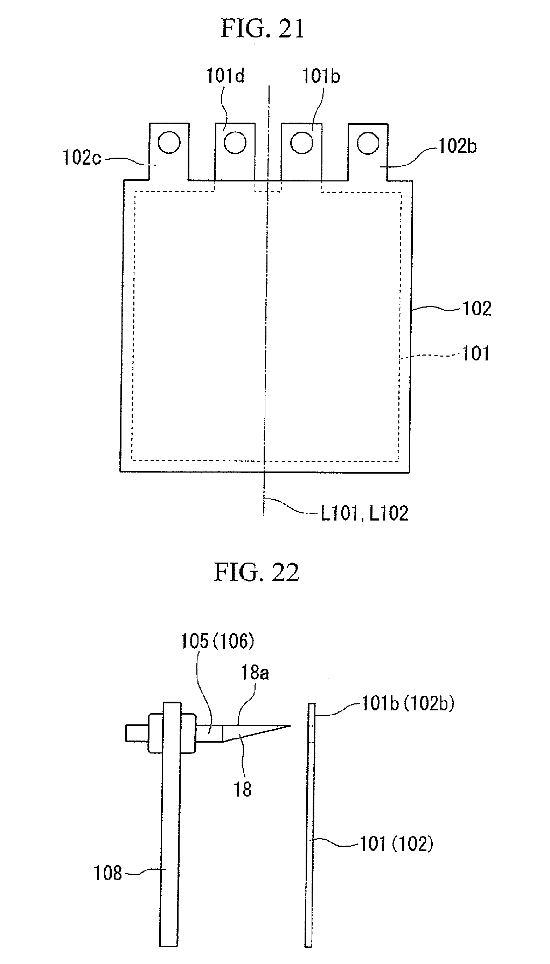

Furthermore, in this embodiment, while the positive electrode plate 101 has one tab 101b and the negative electrode plate 102 has two tabs 102b and 102c, the present invention is not limited thereto. As shown in FIG. 21, the positive electrode plate 101, as well as the negative electrode plate 102, may also have two tabs 101b and 101d, one of which may be referred to as a connecting tab and the other of which may be referred to as a dummy tab.
In addition, the number of tabs is not limited to 2 but may be 3 or more. The positive electrode plate and the negative electrode plate are at least stacked at different positions. That is, the positive electrode plate and the negative electrode plate have at least one or two tabs, which do not overlap each other, and may be arranged to be line-symmetrical with respect to the centerlines L101 and L102 of the electrode plates.
According to the above configuration, the centerlines of the electrode plates coincide with each other due to gravity upon the hanging such that the electrode plates can be positioned and stacked with high precision.
In addition, for example, when the secondary battery is assembled to drive an electric motor of a movable body such as a vehicle and vibration in a centerline direction occurs, because a rotational force to a positive electrode main body at a connecting part between the positive electrode main body and the tab of the positive electrode plate is not occurred or prevented, and because a rotational force to a negative electrode main body at a connecting part between the negative electrode main body and the tab of the negative electrode plate is not occurred or prevented, a breakage of the connecting part can be prevented and thus a failure of the secondary battery can be prevented.
When one of the positive and negative electrode plates has only one tab, like the positive electrode plate of FIG. 4, the tab may be designed to have a larger width than the tab of the other electrode plate. Because strength of the tab can be increased by increasing the width, the breakage can be more effectively prevented.
When the positive electrode plate or the negative electrode plate is surrounded by a pouch-type separator, the tab is arranged to be line-symmetrical with respect to the centerline of the positive electrode plate or the negative electrode plate including the pouch-type separator.

Further, in the manufacturing apparatus, while the cover 108 is arranged on the worktable 2 and then the through-holes 101 c, 102d and 102e of the tabs 101b, 102b and 102c of the positive electrode plate 101 and the negative electrode plate 102 are connected to the positive electrode terminal 105, the negative electrode terminal 106 and the dummy terminal 112, the present invention is not limited thereto.
For example, the positive electrode plate 101 and the negative electrode plate 102 may be stacked and then the tabs 101b, 102b and 102c may be supported and hung by another support member, the stacked state of the electrode body 103 positioned by the hanging is fixed, and then the positive electrode terminal 105, the negative electrode terminal 106 and the dummy terminal 112 of the cover 108 may be connected to the positive electrode tab bundle 103a and the negative electrode tab bundles 103b and 103c.

Upon connection to the terminals, while the tab 102c, which is a dummy tab, is connected to the terminal using the dummy terminal 112, the tab 102c may not be connected to the terminal.
While the guide members 14 are mounted to the terminals before the positive electrode plate 101 and the negative electrode plate 102 are stacked, the present invention is not limited thereto. For example, the guide members may be already mounted on the cover received at the cover receiving position. In this case, there is no need to provide the guide member attachment/detachment unit 9 configured to attach/detach the guide members 14, and it is sufficient to provide a guide member removal unit configured to remove the guide members 14. In addition, while the used guide members 14 have a conical shape, various shapes of guide members can be applied.
Further, similar to a guide member 18 shown in FIG. 22, the guide member may have a conical shape in which a ridge arranged at an upper side thereof is substantially parallel to an axial line of the terminal during the hanging. In this case, the stacking may be easily performed, and positioning precision of the positive electrode plate 101 and the negative electrode plate 102 can be further improved during the hanging.

Hereinabove, while the embodiments of the present invention have been described in detail with reference to the accompanying drawings, specific configurations are not limited to the embodiments but may include design changes without departing from the substance of the present invention.

### [Industrial Applicability]

According to a secondary battery manufacturing apparatus of the present invention, even when a positive electrode plate and a negative electrode plate of the secondary battery have different sizes, the secondary battery in which the electrode plates are precisely positioned and stacked can be manufactured.
According to the secondary battery of the present invention, it is possible to prevent a failure such as breakage of a connecting part between a positive electrode main body and a tab of the positive electrode plate and a connecting part between a negative electrode main body and a tab of the negative electrode plate.

### [Description of Reference Numerals]

1: Secondary battery manufacturing apparatus
2: Worktable
22a: Cover fixing part
3: Electrode plate conveyance unit
4: Cover conveyance unit
5: Standing-up unit
6: Stacking/fixing unit
8: Storing unit
9: Guide member attachment/detachment unit (guide member removal unit)
14: Guide member
31 c: Electrode plate up/down positioning part (positive electrode plate disposing part)
32c: Electrode plate up/down positioning part (negative electrode plate disposing part)
100: Secondary battery
101: Positive electrode plate
101a: Main body
101b, 101d: Tab
101c: Through-hole
102: Negative electrode plate
102a: Main body
102b, 102c: Tab
102d, 102e: Through-hole
103: Electrode body
104: Case
105: Positive electrode terminal
106: Negative electrode terminal
107: Case body
107a: Opening
108: Cover

## Claims

1. A secondary battery comprising:
an electrode body in which a positive electrode plate and a negative electrode plate are alternately stacked through a separator;
a case to store the electrode body; and
a cover having a positive electrode terminal and a negative electrode terminal and fitted to the case,
wherein the positive electrode plate includes a positive electrode main body having a substantial plate shape, and a first tab arranged to be line-symmetrical with respect to a centerline of the positive electrode plate and connected to the positive electrode main body and the positive electrode terminal,
the negative electrode plate includes a negative electrode main body having a substantial plate shape, and a second tab arranged to be line-symmetrical with respect to a centerline of the negative electrode plate and connected to the negative electrode main body and the negative electrode terminal, and
the first tab and the second tab are arranged not to overlap each other when the tabs are stacked.

2. The secondary battery according to claim 1, further comprising a dummy terminal formed at the cover,
wherein the second tab includes a connecting tab and a dummy tab, and
wherein the connecting tab is connected to the negative electrode terminal and the dummy tab is connected to the dummy terminal.

3. A secondary battery manufacturing apparatus comprising:
a cover fixing part to fix a cover having shaft parts of a positive electrode terminal and a negative electrode terminal in order that the shaft parts are directed upward;
a positive electrode plate conveyance part to convey a positive electrode plate having a tab in which a first through-hole is formed and which is arranged to be line-symmetrical with respect to a centerline of the positive electrode plate, to the cover fixing part;
a positive electrode plate disposing part to insert the first through-hole of the conveyed positive electrode plate into the shaft part of the positive electrode terminal;
a negative electrode plate conveyance part to convey a negative electrode plate having a tab in which a second through-hole is formed and which is arranged to be line-symmetrical with respect to a centerline of the negative electrode plate, to the cover fixing part;
a negative electrode plate disposing part to insert the second through-hole of the conveyed negative electrode plate into the shaft part of the negative electrode terminal and to stack the negative electrode plate on the positive electrode plate; and
a standing-up unit to stand the cover fixed by the cover fixing part up in order that the stacked positive electrode plate and the stacked negative electrode plate are hung and positioned.

4. The secondary battery manufacturing apparatus according to claim 3, further comprising:
a stacking/fixing unit to fix the positioned positive electrode plate and the positioned negative electrode plate to each other by using a tape; and
a storing unit to store the positive electrode plate and the negative electrode plate fixed by the tape in a case to which the cover is fitted.

## Amended claims

### Amended claims under Art. 19.1 PCT

**1.** (Amended) A secondary battery comprising:
an electrode body in which a positive electrode plate and a negative electrode plate are alternately stacked through a separator;
a case to store the electrode body; and
a cover having a positive electrode terminal and a negative electrode terminal and fitted to the case,
wherein the positive electrode plate includes a positive electrode main body having a substantial plate shape, and a first tab arranged to be line-symmetrical with respect to a centerline of the positive electrode plate, protruding from the positive electrode main body to a direction along the centerline, and connected to the positive electrode main body and the positive electrode terminal,
the negative electrode plate includes a negative electrode main body having a substantial plate shape, and a second tab arranged to be line-symmetrical with respect to a centerline of the negative electrode plate, protruding from the negative electrode main body to the direction, and connected to the negative electrode main body and the negative electrode terminal, and
the first tab and the second tab are arranged not to overlap each other when the tabs are stacked.

**2.** The secondary battery according to claim 1, further comprising a dummy terminal formed at the cover,
wherein the second tab includes a connecting tab and a dummy tab, and
wherein the connecting tab is connected to the negative electrode terminal and the dummy tab is connected to the dummy terminal.

**3.** A secondary battery manufacturing apparatus comprising:
a cover fixing part to fix a cover having shaft parts of a positive electrode terminal and a negative electrode terminal in order that the shaft parts are directed upward;
a positive electrode plate conveyance part to convey a positive electrode plate having a tab in which a first through-hole is formed and which is arranged to be line-symmetrical with respect to a centerline of the positive electrode plate, to the cover fixing part;
a positive electrode plate disposing part to insert the first through-hole of the conveyed positive electrode plate into the shaft part of the positive electrode terminal;
a negative electrode plate conveyance part to convey a negative electrode plate having a tab in which a second through-hole is formed and which is arranged to be line-symmetrical with respect to a centerline of the negative electrode plate, to the cover fixing part;
a negative electrode plate disposing part to insert the second through-hole of the conveyed negative electrode plate into the shaft part of the negative electrode terminal and to stack the negative electrode plate on the positive electrode plate; and
a standing-up unit to stand the cover fixed by the cover fixing part up in order that the stacked positive electrode plate and the stacked negative electrode plate are hung and positioned.

**4.** The secondary battery manufacturing apparatus according to claim 3, further comprising:
a stacking/fixing unit to fix the positioned positive electrode plate and the positioned negative electrode plate to each other by using a tape; and
a storing unit to store the positive electrode plate and the negative electrode plate fixed by the tape in a case to which the cover is fitted.
